# EUROPEAN PATENT APPLICATION

(11) **EP 1 049 266 A1**
(43) Date of publication of application: **02.11.2000**
(21) Application number: 99303279.6
(22) Date of filing: 27.04.1999
(51) Int. Cl.: H04B 1/707

(54) **Method and apparatus for preamble signature detection using a code matched filter**

(71) Applicant: LUCENT TECHNOLOGIES INC., Murray Hill, New Jersey 07974-0636 (US)
(72) Inventor: Barton, Paul, Torquay, Devon TQ1 1SN (GB); Lin, Jie, Swindon, Wilts SN5 6PP (GB); Bhatoolaul, David Lahiri, Swindon, Wiltshire (GB)
(74) Representative: Williams, David John

(57) **Abstract**

The invention is a method and an apparatus for performing coherent detection of a preamble signature. Coherent detection is achieved using a code match filter (32) having N number of taps configured to match a spreading code. The output (33) of the code matched filter includes either a positive or negative auto-correlation peak once every symbol period. Such code matched filter output (33) is fed to a plurality of mixers (34-*t*). Each mixer (34-*t*) multiplies the code match filter output (33) with a different square wave signal (37-*t*) modulated to match one of the possible signatures. The mixer outputs are fed to a plurality of post detection integration components (38-*t*) to produce outputs (45-*t*) with a length of *n* corresponding to a time interval associated with N chips.

## Description

### BACKGROUND OF THE RELATED ART

The present invention relates generally to wireless communications systems and, in particular, to wireless communications systems based on Code Division Multiple Access (CDMA).

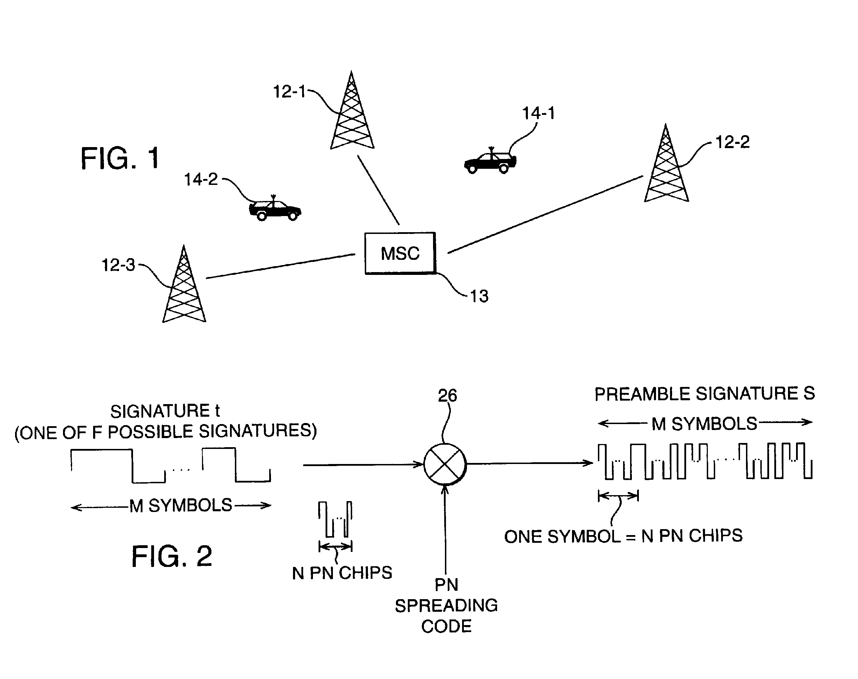

FIG. 1 depicts a wireless communications system 10 comprising a plurality of base stations (BS) 12-*j*, a mobile switching center (MSC) 13 and a plurality of mobile-telephones (MT) 14-*k*. BS 12-*j* are connected to MSC 13, which is connected to a Public Telephone Switching Network (PTSN), not shown. BS 12-*j* and MT 14-*k* communicate with each other by the transmission of information bearing signals via a plurality of communication channels, which include downlink channels for transmitting signals from BS 12-*j* to MT 14-*k* and uplink channels for transmitting signals from MT 14-*k* to BS 12*-j*.

In wireless communications systems incorporating code division multiple access (CDMA) techniques, such as those based on the proposed third generation CDMA UTRA (Universal mobile Terrestrial Radio Access) standard, MT 14-*k* is required to undergo a system access stage before MT 14-*k* may use the services of the system, such as originate or receive a telephone call. The system access stage includes a process referred to as initial timing acquisition. In initial timing acquisition, BS 12-*j* determines a delay time due to the propagation of a signal from BS 12-*j* to MT 14-*k* and back to BS 12-*j*. Such delay is referred to hereinafter as a "round trip delay." By acquiring this initial timing or round trip delay, BS 12-*j* is better able to estimate when signals transmitted by MT 14-*k* will arrive at BS 12-*j*, therefore enabling more efficient demodulation of uplink signals by BS 12*-j*.

Initial timing acquisition involves MT 14-k creating and transmitting a preamble signature *S* to BS 12-*j*, and BS 12-*j* detecting the preamble signature *S* and determining the round trip delay between BS 12-*j* and MT 14-*k* using the detected preamble signature *S*. Preamble signature *S* comprises of a signature t having a known sequence of M symbols selected from a finite set of F possible signatures (*t*=1 ,F). Each of the M symbols (or succession of 2/3/4/... symbols) is spread using a same finite length pseudo random noise spreading code (or some other spreading code) that comprises of N PN chips configured in a known sequence.

FIG. 2 illustrates how preamble signature *S* may be created by MT 14-*k*. Signature *t* and PN spreading code are provided as input to mixer 26 where they are multiplied to produce preamble signature *S* having a known sequence ofNxM PN chips. Note that since there are F possible signatures *t* and one PN spreading code, there will be F possible preamble signatures S.

BS 12-*j* detects preamble signature *S* transmitted by MT 16-*k* using at least one correlator. The correlator may employ either non-coherent or coherent detection. With non-coherent detection, the correlator has a priori knowledge of the PN spreading code. This allows the BS to determine the round trip delay for a particular MT without assuming a particular signature. The BS therefore requires a separate second stage of post-processing to determine the signature value once it has acquired an estimate of the round trip delay. By contrast, with coherent detection, the correlator has a priori knowledge of the PN spreading code and signature *t* and can therefore determine the round trip delay and signature value in one stage (or several stages, if desired) of processing. In coherent detection, knowledge of both PN spreading code and signature *t* permits the correlator to look for a preamble signature S having a particular sequence of NxM PN chips, thereby enabling a more robust detection of the preamble signature *S* as opposed to non-coherent detection. In other words, in terms of performance, correlators employing coherent detection provide more accurate detection of preamble signature *S* than correlators employing non-coherent detection. Truer detection of preamble signature *S* is desired because it allows for a more accurate determination of round trip delay.

Coherent or non-coherent detection may be performed either in the frequency domain using Fast Fourier Transformations (FFT) or in the time domain using Code Matched Filters (CMF). In terms of performance, CMF is typically much faster than FFT. Thus, coherent detection using code matched filters is preferred because it provides for a fast, robust detection of preamble signature S.

To perform coherent detection using CMF, the code matched filter must have at least NxM number of taps, wherein each tap is configured to match the sequences of the NxM PN chips associated with preamble signature *S*. For preamble signatures having a large number of PN chips, the code match filter becomes expensive, large and complex in terms of the number of taps and processing time.

For the UTRA (Universal mobile Terrestrial Radio Access) third generation CDMA proposal, there are 16 possible signatures *t* (i.e., F=16) comprising of 16 symbols (i.e., M=16), and the PN spreading code will have 256 PN chips (i.e., N=256). Thus, there can be 16 possible preamble signatures *S*, wherein each preamble signature *S* will comprise of a known sequence of 4096 PN chips (i.e., 16 symbols per signature x 256 PN chips per PN spreading code). To perform coherent detection using code matched filters, BS 12-*j* needs at least 16 code matched filters having at least 4096 taps, wherein each of the code matched filters are configured to search for one of the sixteen different possible sequences of 4096 PN chips associated with preamble signatures *S*. The cost of performing coherent detection using CMF can be very expensive for UTRA CDMA based base stations. Accordingly, there exists a need for a fast but less expensive and complex way to perform coherent detection of a preamble signature.

The present invention is a method and an apparatus for performing coherent detection of a preamble signature without sacrificing speed while minimizing cost and complexity. Coherent detection is achieved using a code matched filter having N number of taps configured to match a spreading code being used to spread signatures, wherein N represents a number of chips in the spreading code. The output of the code matched filter includes an auto-correlation peak once every symbol period, wherein the auto-correlation peak is either positive or negative. Such code matched filter output is fed to F number of mixers, wherein F represents a number of possible signatures. Each mixer multiplies the code match filter output with a different square wave signal modulated to match one of the possible signatures. The mixer outputs are fed to F number of post detection integration components to produce F outputs with a length of *n*, where *n* corresponds to a time interval associated with N chips. The post detection integration component output with the largest peak is deemed to have maximum correlation, wherein the phase position of the largest peak indicates the round trip delay between a mobile-telephone from which the preamble signature was transmitted and a base station receiving the preamble signature.

Advantageously, the present invention provides fast coherent detection using a code match filter having N number of taps, as opposed to using a code match filter with NxM number of taps. Accordingly, the present invention is less expense and less complex.

The features, aspects, and advantages of the present invention will become better understood with regard to the following description, appended claims, and accompanying drawings where:
FIG. 1 depicts a wireless communications system comprising a plurality of base stations, a mobile switching center and a plurality of mobile-telephones;
FIG. 2 illustrates how a preamble signature S may be created by a mobile-telephone;
FIG. 3 depicts an apparatus having circuitry for detecting the preamble signature *S* having NxM PN chips in accordance with the present invention;
FIG. 4 depicts an example of outputs of a code matched filter and a local oscillator;
FIG. 5 illustrates an example of an output signal from a mixer where all the auto-correlation peaks are positive; and
FIG. 6 depicts an example of a post detection integration component output exhibiting maximum correlation.

### DETAILED DESCRIPTION

The present invention is described herein in relation to wireless communications systems employing Code Division Multiple Access (CDMA) techniques based on the developing UTRA CDMA standard. This should not be construed, however, to limit the present invention in any manner. The present invention is equally applicable to wireless communications system employing other multiple access techniques or CDMA techniques based on a different standard.

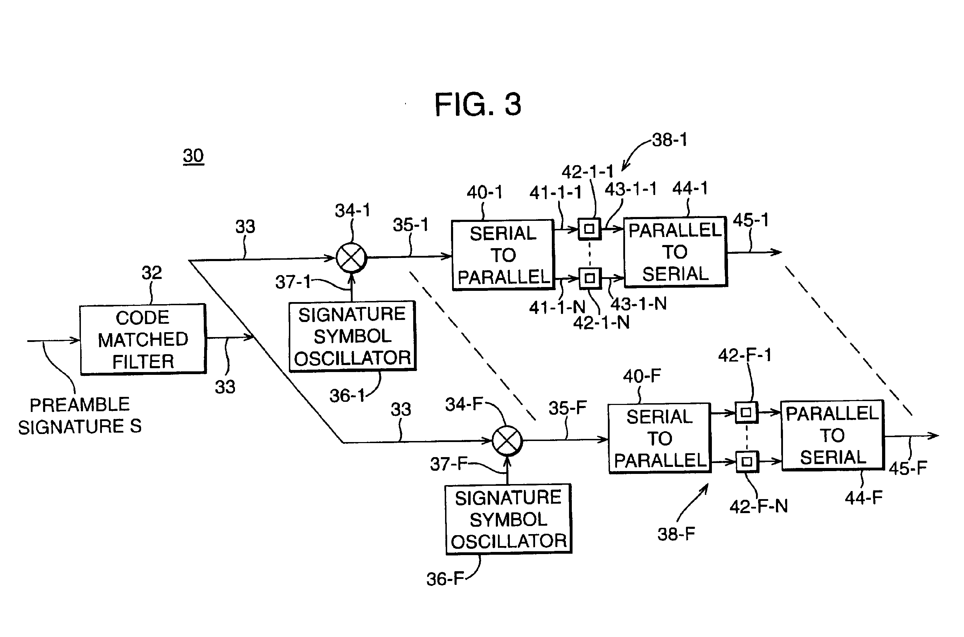

FIG. 3 depicts an apparatus 30 having circuitry for detecting preamble signature *S* having NxM PN chips, wherein N represents the number of PN chips in the PN spreading code and M represents the number of symbols in signature *t* being spread by the PN spreading code and is preferably greater than one, as shown in FIG. 2. Apparatus 30 comprises Code Matched Filter 32, a plurality of mixers 34-*t*, a plurality of local oscillator 36-*t* and a plurality of post detection integration components 38-*t*. Preamble signature S is provided as input to Code Matched Filter 32. CMF 32 comprises at least N number of taps configured to match the known sequence of the PN spreading code for cross-correlating preamble signature *S* with the PN spreading code. Note that a multiple of N taps allows over-sampling to improve the round trip delay timing estimate resolution.

Given an input sequence of symbols spread using the PN spreading code, i.e., preamble signature *S*, CMF 32 should produce an output signal 33 that includes an auto-correlation peak once every symbol period. Each of these auto-correlation peaks will either be positive or negative depending on the value of the original symbol (of signature *t*). Note that CMF should have less than NxM number of taps.

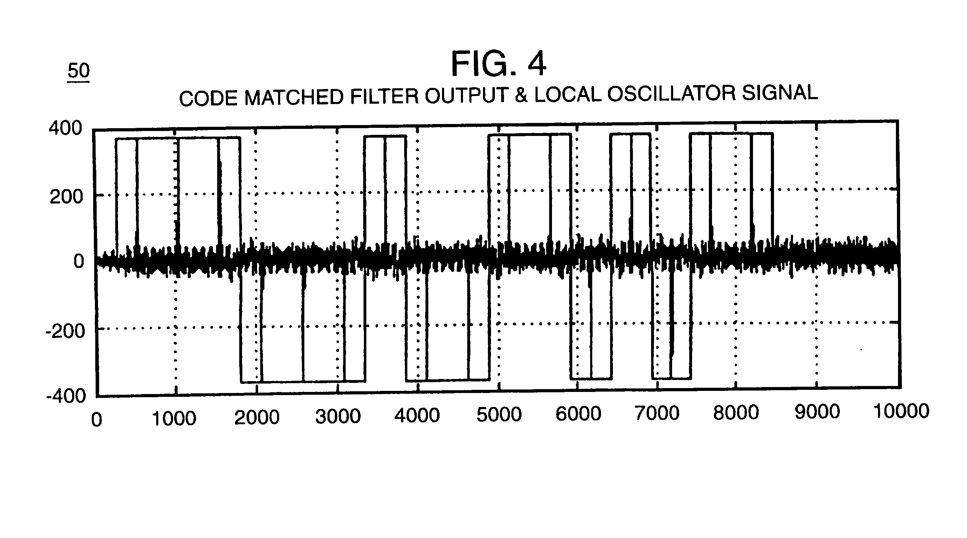

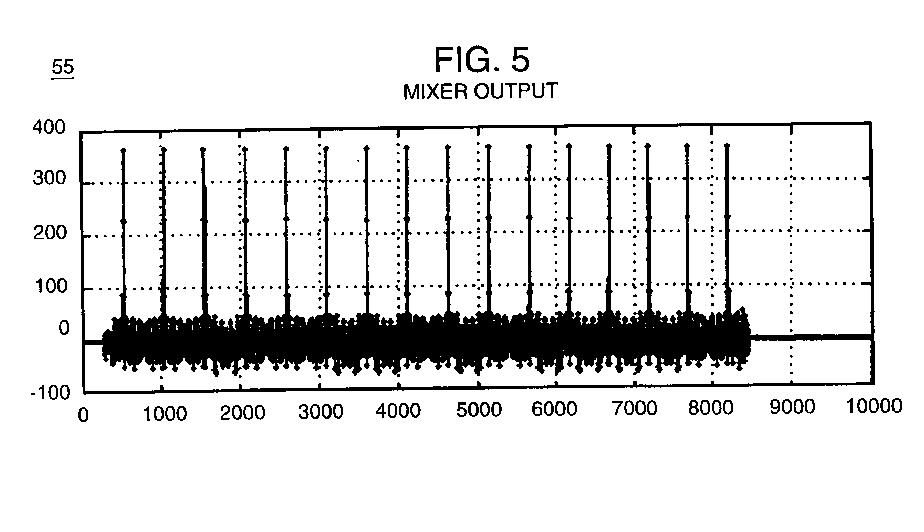

Each of the plurality of local oscillators 36-t produces a square wave signal 37-*t* modulated to match signature *t* - that is, the plurality of local oscillators 36-*t* produce each of the F possible signatures *t*. Thus, one of the square wave signals 37-*t* should be identical to the signature *t* that was spread by PN spreading code 24 at MT 14-*k* to produce preamble signature *S*. The outputs of CMF 32 and local oscillator 36-*t*, i.e., outputs signal 33 and 37-*t*, are provided as inputs to the plurality of mixers 34-*t*. See FIG. 4, which is an example depicting the outputs of CMF 32 and local oscillator 36-*t*. In each mixer 34-*t*, the output signal 33 is multiplied or mixed with the square wave signal 37-t to produce a mixed output signal 35-*t*. The mixer 34-*t* associated with signature symbol oscillator 36-*t* that produced the identical signature 22 should produce a mixed output signal 35-*t* wherein all the auto-correlation peaks are positive. See FIG. 5, which is an example of an output signal 35-*t* where all the auto-correlation peaks are positive.

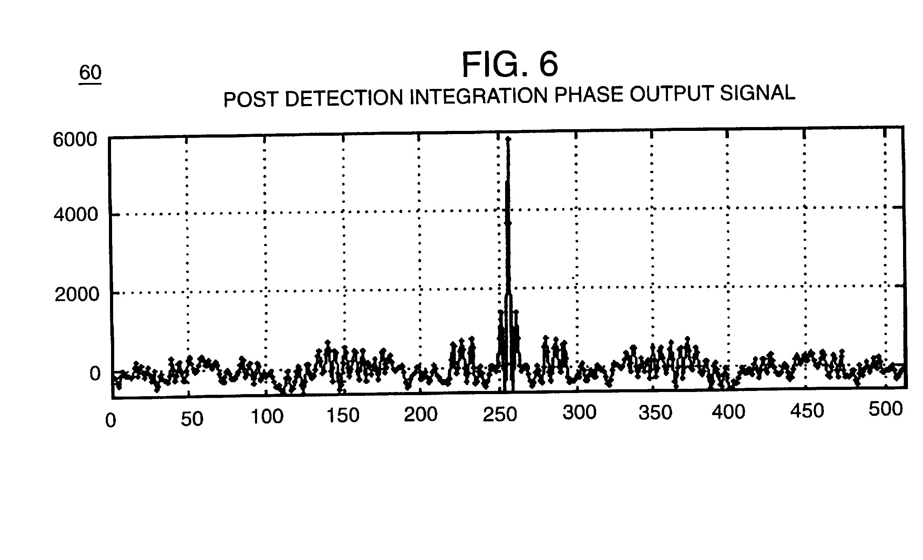

Output signals 35-*t* are provided as inputs to post detection integration components 38-*t* for forming an output signal 45-*t* having a length of *n,* wherein *n* corresponds to the time interval associated with N PN chips. In one embodiment, each post detection integration component 38-*t* comprises a serial-to-parallel device 40-*t*, summers 42-*t-p* and a parallel-to-serial device 44-*t*, where *p*=1,...,N. Each serial-to-parallel device 40-*t* decimates or down-samples an output signal 35-*t* from mixer 34-*t* to produce a set of N unique parallel streams 41-*t-p*. Summer 42-*t-p* accumulates M successive samples for each parallel stream 41-*t-p* to produce a set of N accumulated samples, i.e., outputs 43-t-p. The accumulated samples (in each set of accumulated samples) are recombined to form the output signal 45-*t*. The output 45-*t* having the largest or highest peak is deemed to have maximum correlation. See FIG. 6, which is an example depicting an output 45-*t* with maximum correlation. The phase position of the largest or highest peak being indicative of the round trip delay between the mobile-telephone from which the preamble signature was transmitted and the base station receiving the preamble signature.

To maximize the range of preamble signature round trip delay (commonly referred to as the search window) that the BS can successfully estimate without minimizing the maximum theoretical auto-correlation peak obtainable (i.e., without sacrificing performance), correct synchronization of apparatus 30 is required in code (PN sequence and signature) and time space. Apparatus 30 is correctly synchronized when CMF 32 begins computation when N samples (at the chip rate) of a received preamble signature suffering zero round trip delay have been loaded into filter tap memory. For systems where the correct synchronization can be achieved, apparatus 30 can be configured to have a search window length equivalent to one symbol duration (assuming the PN spreading code is repeated on a symbol basis).

A simple technique to extend the search window of the BS from a single (preamble signature) symbol period to two extra symbol periods, the following modifications to the apparatus and operation of apparatus are required. Operate the existing CMF for an extra symbol period (i.e. an extra N chips are processed). No re-timing of the start time of computation by this filter is required. Add another local square wave generator (matched to the desired preamble signature) mixer stage and post detection phase to the output of the existing CMF in parallel to the existing stages. Synchronize this extra local square wave generator, mixer stage and post detection phase to begin operation (multiplication of CMF output by non-zero preamble signature matched sequence) one symbol period after the existing local square generator and mixer stages. The basic technique described above can be extended to accommodate BS search windows longer than 2 symbol periods by adjusting the start time of the addition parallel processing second phase and extending the operation of the shared CMF.

Although the present invention has been described in considerable detail with reference to certain embodiments, other versions are possible. It would be apparent to one of ordinary skill in the art to apply the concept of the present invention to other type of communications systems, and not just to wireless communications system incorporating CDMA technology. Therefore, the spirit and scope of the present invention should not be limited to the description of the embodiments contained herein.

## Claims

1. A method for coherent detection of a sequence of NxM chips, wherein N represents a number of chips in a spreading code and M represents a number of symbols being spread of a signature by said spreading code, the method comprising the step of:
detecting a sequence of N chips using a correlator (32) for detecting said spreading code.

2. The method of claim 1 further comprising the step of:
generating square wave signals (36) modulated to match each possible signature; and
mixing (34) each of said square wave signals with an output of said correlator to produce mixed output signals.

3. The method of claim 2 further comprising the step of:
performing post detection integration (38) for said sequence ofNxM chips using said mixed output signals.

4. The method of claim 3, wherein the step of performing post detection integration comprises, for each said mixed output signal, the steps of:
decimating (40) said mixed output signal to produce a set of N parallel streams;
accumulating (42) M successive samples for each of parallel stream to produce a set of N accumulated samples;
combining (44) accumulated samples in said set of N accumulated samples to produce an output signal of length n, which is equivalent to a time interval corresponding to N chips.

5. The method of claim 4, wherein an output signal of length n with a highest peak is deemed to be associated with a maximum correlation.

6. An apparatus for coherent detection of a sequence of NxM chips, wherein N represents a number of chips in a spreading code and M represents a number of symbols of a signature being spread by the spreading code, the apparatus comprising:
a correlator (32) for detecting a sequence of N chips matching said spreading code.

7. The apparatus of claim 6, wherein the correlator (32) is a code matched filter having N number of taps configured to match the spreading code.

8. The apparatus of claim 6 further comprising:
a plurality of local oscillators (36) for generating square wave signals modulated to match each possible signature; and
a plurality of mixers (34) for multiplying each of said square wave signals with an output from said correlator.

9. The apparatus of claim 8 further comprising.
a plurality of post detection integration components (38) for detecting said sequence of NxM chips using outputs from said plurality of mixers.

10. The apparatus of claim of claim 9, wherein each of said plurality of post detection integration components comprises:
a serial to parallel device (40) for converting said correlator output into N parallel streams;
a plurality of summers (42) for accumulating M successive samples for each said N parallel streams;
a parallel to serial device (44) for combining said N parallel streams into an output.
